(19) Europäisches Patentamt
European Patent Office
Office européen des brevets

(11) EP 4 224 579 A1

(12) EUROPEAN PATENT APPLICATION
published in accordance with Art. 153(4) EPC

(43) Date of publication:
09.08.2023 Bulletin 2023/32

(51) International Patent Classification (IPC):
$H01M\ 4/58$ (2010.01)    $H01M\ 4/525$ (2010.01)

(21) Application number: 21947358.4

(22) Date of filing: 13.12.2021

(86) International application number:
PCT/CN2021/137492

(87) International publication number:
WO 2023/108352 (22.06.2023 Gazette 2023/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Technology
Co., Limited
Ningde City, Fujian 352100 (CN)

(72) Inventors:
• XU, Xiaofu
Ningde City
Fujian 352100 (CN)
• PAN, Jianfu
Ningde City
Fujian 352100 (CN)
• ZHANG, Xinyu
Ningde City
Fujian 352100 (CN)
• YE, Yonghuang
Ningde City
Fujian 352100 (CN)
• SUN, Jingxuan
Ningde City
Fujian 352100 (CN)
• LIU, Qian
Ningde City
Fujian 352100 (CN)

(74) Representative: Jacob, Reuben Ellis et al
Maucher Jenkins
Seventh Floor Offices
Artillery House
11-19 Artillery Row
London SW1P 1RT (GB)

(54) POSITIVE ELECTRODE ACTIVE MATERIAL AND RELATED ELECTRODE SHEET, SECONDARY BATTERY, BATTERY MODULE, BATTERY PACK, AND DEVICE

(57) The present application provides a positive electrode active material comprising an A material as described below and a B material as described below, wherein the A material is at least one selected from the following single crystal materials or single crystal-like materials: $Li_xM_y(PO_4)_z$, wherein M is selected from one or more of Ni, Co, Mn, Fe, Mg, Al, V, Zn, Zr, and F, v is the valence of M, $1 \leq x \leq 3$, $1 \leq z \leq 3$, and $x+vy-3z=0$; the A material has a Dv50 of 0.8 $\mu$m to 4.2 $\mu$m; the B material is selected from at least one of the following materials: (i) $LiAO_2$, wherein A is Ni, Co or Mn; or (ii) $LiNi_aCo_bE_{1-a-b}O_2$, wherein E is selected from at least one of Mn and Al, $0.50 \leq a \leq 0.98$, and $0.001 \leq b \leq 0.3$; wherein based on the total weight of the positive electrode active material, the A material is present in a mixing ratio m of 50 wt% to 97 wt%. The positive electrode active material of the present application has the advantages of cost-effectiveness, good safety, long cycle life, high energy density, and the like.

FIG. 2

**Description**

**Technical Field**

The present application relates to the technical field of lithium batteries, and in particular to a positive electrode active material, a positive electrode sheet, a secondary battery, a battery module, a battery pack and an electrical apparatus.

**Background Art**

Currently, lithium-ion secondary batteries commonly use ternary materials (such as lithium nickel cobalt manganate (NCM) and lithium nickel cobalt aluminate (NCA)) or quaternary materials (such as lithium nickel cobalt manganese aluminate (NCMA)) as positive electrode active materials. However, while such materials have the advantage of energy density, they also have the disadvantages of high price, short cycle life, poor safety, and the like.

Lithium iron phosphate (LFP) has gradually been widely used due to its advantages of low cost, good safety, and the like. However, the energy density of such materials is not always satisfactory. While lithium manganese iron phosphate (LMFP) as an improvement increases the energy density while maintaining the advantages of LFP such as better safety, long service life, and the like, the improvement is very limited.

Currently, there is a need in the art for more desirable positive electrode active materials that should be balanced in performance, that is, they are cost effective, good in safety, and have at least one of good cycle life and improved energy density.

**Summary of the Invention**

The present application has been made in view of the above-mentioned topics, and an object thereof is to provide a positive electrode active material with balanced performance having at least one of cost effectiveness, good safety, improved long cycle life, and improved energy density (especially gram capacity).

In order to achieve the above object, the present application provides a positive electrode active material and a related electrode sheet, a secondary battery, a battery module, a battery pack and an apparatus thereof.

A first aspect of the present application provides a positive electrode active material comprising an A material as described below and a B material as described below, wherein the A material is at least one selected from the following materials:

$$Li_xM_y(PO_4)_z$$

Wherein M is selected from one or more of Ni, Co, Mn, Fe, Mg, Al, V, Zn, Zr and F, $1 \leq x \leq 3$, $1 \leq z \leq 3$, v is the valence of M, and $x+vy-3z=0$;

The A material is a single crystal material or a single crystal-like material;

The A material has a Dv50 of 0.8 $\mu$m to 4.2 $\mu$m, optionally 0.8 $\mu$m to 3.2 $\mu$m, more optionally 0.9 $\mu$m to 2.3 $\mu$m, and still more optionally 1 $\mu$m to 1.5 $\mu$m;

The B material is selected from at least one of the following materials:

(i) $LiAO_2$, wherein A is Ni, Co or Mn; and
(ii) $LiNi_aCo_bE_{1-a-b}O_2$, wherein E is selected from at least one of Mn and Al, $0.50 \leq a \leq 0.98$, and $0.001 \leq b \leq 0.3$;

The A material is present in a mixing ratio, i.e., m, of 50 wt% to 97 wt%, optionally 65 wt% to 97 wt%, more optionally 70 wt% to 95 wt%, and still more optionally 80 wt% to 95 wt%, based on the total weight of the positive electrode active material.

Thus, in the present application, the positive electrode active material is obtained by blending a relatively large amount of the A material with the specific B material, and the positive electrode active material has good overall properties: it retains the advantages of the A material such as safety, cost effectiveness, and the like, and does not significantly lose the cycle life advantage of the A material while improving the gram capacity compared with the use of the A material alone.

In any of embodiments, in the positive electrode active material of the present application, the B material is present in a mixing ratio of 3 wt% to 50 wt%, optionally 5 wt% to 30 wt%, based on the total weight of the positive electrode active material. By mixing the B material with the A material in such a mixing ratio, the gram capacity of the obtained positive electrode active material can be improved compared with that of the A material alone without significantly losing the cycle life advantage of the A material.

In any of embodiments, in the positive electrode active material of the present application, the A material is selected from at least one of:

Lithium manganese iron phosphate or lithium iron phosphate of chemical formula $LiMn_dFe_{1-d}PO_4$, wherein $0 \le d \le 0.9$, optionally $0.1 \le d \le 0.9$, and more optionally $0.1 \le d \le 0.8$; and
Lithium vanadium phosphate of chemical formula $Li_3V_2(PO_4)_3$.

By further selecting the above materials as the A materials, the positive electrode active material of the present application can be more cost effective with longer cycle life and excellent safety performance.

In any of embodiments, in the positive electrode active material of the present application, the A material has a specific surface area (BET) of 8 $m^2/g$ to 26 $m^2/g$, optionally 10 $m^2/g$ to 24 $m^2/g$, and more optionally 10 $m^2/g$ to 23 $m^2/g$. By controlling the BET of the A material within the above range, the electrochemical reaction area can be effectively limited, thus reducing and suppressing the interfacial side reactions during cycling, decreasing the cycle attenuation rate, and thereby extending the cycle life.

In any of embodiments, in the positive electrode active material of the present application, in (ii) $LiNi_aCo_bE_{1-a-b}O_2$ of the B material, $0.5 \le a \le 0.98$, optionally $0.50 < a < 0.90$, more optionally $0.50 < a < 0.88$, and still more optionally $0.55 \le a \le 0.88$; and/or $0.005 \le b \le 0.30$, optionally $0.05 \le b \le 0.30$, and more optionally $0.05 \le b \le 0.20$. By controlling a and b in the general formula of the B material within the above range, it is helpful to further improve the gram capacity and cycle life of the positive electrode active material obtained by mixing the material A with the material B.

In any of embodiments, in the positive electrode active material of the present application, in (ii) $LiNi_aCo_bE_{1-a-b}O_2$ of the B material, a and b have the following relationship: $k = (a+b)/(1-a-b)$, and $1.5 \le k \le 99$, and optionally $1.5 \le k \le 19$. By limiting the factor k within the above range, the gram capacity and/or cycle life can be further improved.

In any of embodiments, in the positive electrode active material of the present application, in (ii) $LiNi_aCo_bE_{1-a-b}O_2$ of the B material, the relationship between the k and m is as follows: $k*m \ge 1$, optionally $k*m \ge 1.1$, and more optionally $k*m \ge 1.6$. When $k*m$ is within the above range, the positive electrode active material has more excellent gram capacity and cycle life.

In any of embodiments, in the positive electrode active material of the present application, the B material is $LiNi_aCo_bMn_{1-a-b}O_2$, $LiNi_aCo_bAl_{1-a-b}O_2$, $LiNi_aCo_bMn_cAl_{1-a-b-c}O_2$, or a combination thereof, wherein a and b are as defined above, and $0.01 \le c \le 0.34$. By selecting the above-mentioned B material, the gram capacity and/or cycle life of the positive electrode active material can be further improved.

In any of embodiments, in the positive electrode active material of the present application, the B material is a single crystal or a single crystal-like material, the particle thereof has a Dv50 of 2 $\mu m$ to 4.5 $\mu m$, optionally 2.1 $\mu m$ to 4.4 $\mu m$, and more optionally 3.5 $\mu m$ to 4.4 $\mu m$; and/or a BET of 0.40 $m^2/g$ to 1.20 $m^2/g$, optionally 0.55 $m^2/g$ to 0.95 $m^2/g$, and more optionally 0.55 $m^2/g$ to 0.89 $m^2/g$. Selecting the B material as defined above can further improve the gram capacity of the positive electrode active material.

In any of embodiments, in the positive electrode active material of the present application, the B material is a secondary particle having a Dv50 of 3.5 $\mu m$ to 13 $\mu m$, and optionally 3.5 $\mu m$ to 12 $\mu m$; and/or a specific surface area of 0.31 $m^2/g$ to 1.51 $m^2/g$, and optionally 0.54 $m^2/g$ to 1.51 $m^2/g$. By selecting the above-mentioned B material in the form of secondary particles, the diffusion path and bulk diffusion resistance of lithium ions can be reduced, the polarization of the material can be reduced, and the capacity utilization of the positive electrode active material can be improved, so that the gram capacity of the positive electrode active material can be increased.

A second aspect of the present application further provides a positive electrode sheet comprising a current collector and an electrode sheet material layer provided on at least one surface of the current collector, wherein the electrode sheet material layer comprises the positive electrode active material of the first aspect of the present application.

A third aspect of the present application further provides a secondary battery comprising the positive electrode active material of the first aspect or the positive electrode sheet of the second aspect of the present application.

A fourth aspect of the present application further provides a battery module comprising the secondary battery of the third aspect of the present application.

A fifth aspect of the present application further provides a battery pack comprising the battery module of the fourth aspect of the present application.

A sixth aspect of the present application further provides an electrical apparatus comprising at least one selected from the secondary batteries of the third aspect, the battery module of the fourth aspect, or the battery pack of the fifth aspect of the present application.

The positive electrode active material of the present application has good overall properties: cost-effectiveness, good safety, improved energy density (especially gram capacity) and good cycle life.

## Description of Drawings

Fig. 1 is a schematic view of a secondary battery according to an embodiment of the present application.
Fig. 2 is an exploded view of the secondary battery according to an embodiment of the present application shown in Fig. 1.
Fig. 3 is a schematic view of a battery module according to an embodiment of the present application.
Fig. 4 is a schematic view of a battery pack according to an embodiment of the present application.
Fig. 5 is an exploded view of the battery pack according to an embodiment of the present application shown in Fig. 4.
Fig. 6 is a schematic view of an electrical apparatus in which a secondary battery is used as a power source according to an embodiment of the present application.

Description of reference numerals:
1 Battery pack; 2 Upper box; 3 Lower box; 4 Battery module; 5 Secondary battery; 51 Case; 52 Electrode assembly; 53 Top cover assembly

## Detailed Description

Hereinafter, embodiments of a positive electrode active material, a positive electrode sheet, a secondary battery, a battery module, a battery pack, and an electrical apparatus of the present application are specifically disclosed in detail with reference to the accompanying drawings, as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. In addition, if the minimum range values 1 and 2 are listed, and if the maximum range values 3, 4, and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, wherein both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specified, the terms "include/including" and "comprise/comprising" mentioned in the present application may be open-ended or closed-ended. For example, the "including" and "comprising" may indicate that it is also possible to include or comprise other components not listed, and it is also possible to include or comprise only the listed components.

Unless otherwise specified, the term "or" is inclusive in the present application. By way of example, the phrase "A or B" means "A, B, or both A and B." More specifically, the condition "A or B" is satisfied by any one of the following conditions: A is true (or present) and B is false (or absent); A is false (or absent) and B is true (or present); or both A and B are true (or present).

Currently, lithium-ion secondary batteries commonly use ternary materials (such as NCM, NCA materials) or quaternary materials (such as NCMA materials) as positive electrode active materials, and such materials are favored for their high energy density. However, while such materials have the advantage of energy density, they also have a number of non-negligible disadvantages, such as high price, shorter cycle life, and poor safety.

In this context, lithium iron phosphate (LFP) materials, with their lower cost, good safety, long cycle life and other advantages, have gradually been widely used; however, the only shortcoming is that the energy density of such materials does not meet the demand. While lithium manganese iron phosphate (LMFP) material, which is produced as a technical improvement of LFP material, has improved energy density to some extent, it still cannot fully meet the demand.

In view of the foregoing, there is a need in the art for a positive electrode active material with balanced performance, that is cost effective, good in safety, and has at least one of higher energy density and longer cycle life.

Without being bound to any theory, the inventors of the present application have found that if other positive electrode active materials with high energy density (such as ternary or quaternary materials) are mixed with LFP and/or LMFP materials for improving the energy density of the latter, in most cases, no positive electrode active materials with balanced performance can be obtained; an arbitrary mixing may not only fail to improve the gram capacity of the LFP and/or LMFP materials, but may even also seriously lose their cycle life advantage (and even worsen the cycle life to an unacceptable level). The materials thus obtained are not balanced in performance, and have no practical application value.

In view of the above problems, the inventors of the present application have proposed a positive electrode active material obtained by blending a specific LFP and/or LMFP material with a specific ternary and/or quaternary material. The positive electrode active material of the present application has good overall properties. That is, compared with LFP and/or LMFP material alone, the positive electrode active material of the present application has improved energy density (especially gram capacity) without significantly increasing the cost and significantly losing the cycle life advantage. Even in some cases, compared with LFP and/or LMFP material alone, the positive electrode active material of the present application has both improved gram capacity and improved cycle life.

**Positive electrode active material**

In one embodiment of the present application, the present application proposes a positive electrode active material comprising: an A material as described below and a B material as described below, wherein

The A material is at least one selected from the following materials:

$$Li_xM_y(PO_4)_z$$

Wherein M is selected from one or more of Ni, Co, Mn, Fe, Mg, Al, V, Zn, Zr and F, $1 \leq x \leq 3$, $1 \leq z \leq 3$, v is the valence of M, and $x + vy - 3z = 0$;

The A material is a single crystal material or a single crystal-like material;

The A material has a Dv50 of 0.8 $\mu$m to 4.2 $\mu$m;

The B material is selected from at least one of the following materials:

(i) $LiAO_2$, wherein A is Ni, Co or Mn; or

(ii) $LiNi_aCo_bE_{1-a-b}O_2$, wherein E is selected from at least one of Mn and Al, $0.50 \leq a \leq 0.98$, and $0.001 \leq b \leq 0.3$;

The A material is present in a mixing ratio, i.e., m, of 50 wt% to 97 wt%, based on the total weight of the positive electrode active material.

Without being bound to any theory, the inventors have found that the positive electrode active material of the present application obtained by blending a specific B material in a relatively large amount (not less than 50 wt% based on the total weight of the positive electrode active material) of the A material has good overall properties: compared with the use of the A material alone, the positive electrode active material of the present application has the advantages of the A material such as safety, cost effectiveness, and the like, and also improves the gram capacity without significantly losing the cycle life advantage of the A material. Particularly, in some embodiments, in the positive electrode active material of the present application, there is also a "synergistic effect" between the A material and the B material, such that the resulting positive electrode active material has both an improved gram capacity and an extended cycle life as compared with the A material alone.

By using a single crystal material or a single crystal-like material with a Dv50 of 0.8 $\mu$m to 4.2 $\mu$m as the A material, the diffusion path of lithium ions can be shortened, thereby effectively improving the gram capacity utilization and cycle life of the positive electrode active material of the present application.

In some embodiments, optionally the A material has a Dv50 of 0.8 $\mu$m to 3.2 $\mu$m, more optionally 0.9 $\mu$m to

2.3 $\mu$m, and still more optionally 1 $\mu$m to 1.5 $\mu$m. By controlling the Dv50 value of the A material within the above range, the gram capacity and/or cycle life of the positive electrode active material can be further improved.

In some embodiments, in the positive electrode active material of the present application, A material is present in a mixing ratio, i.e., m, of optionally 65 wt% to 97 wt%, more optionally 70 wt% to 95 wt%, and still more optionally 80 wt% to 95 wt%, based on the total weight of the positive electrode active material. By further selecting the mixing ratio, i.e., m, of the A material, the gram capacity and/or cycle life of the positive electrode active material of the present application can be further improved.

As used herein, the terms "single crystal-like particles", "quasi-single crystal particles", "single crystal particles", "single crystal material particles" or similar expressions thereof have substantially similar meanings, which mean individual particles (i.e., primary particles) and/or agglomerated particles formed by agglomeration of no more than 30 (in particular, about 5 to 15) primary particles having an average particle diameter of not less than 0.8 $\mu$m (in particular, having an average particle diameter in the range of 800 nm to 10000 nm).

As used herein, the term "average particle diameter" is defined as follows: the material is tested by a scanning electron microscope, the test sample and magnification are adjusted, so that there are more than 100 primary particles in the field of view; the size of the particle in the length direction is measured with a ruler, and a total of 100-200 primary particles are measured; and then after 1/10 of the particles with the maximum particle diameter and 1/10 of the particles with the minimum particle diameter are removed, the particle diameter data of the remaining 8/10 particles are used to calculate the average value, that is, the average particle diameter.

As used herein, the term "primary particles" means individual particles that are not agglomerated, i.e., "primary particles" in the sense commonly known in the art.

As used herein, the terms "secondary particles" and "polycrystalline material particles" generally have similar meanings, which mean particles formed by agglomeration of more than 30 primary particles having an average particle diameter of not more than 0.8 $\mu$m (in particular, having an average particle diameter in the range of 50-800 nm).

As used herein, the term "Dv50" means that 50% by volume of the particles in the powder particle size distribution have a particle diameter that does not exceed the current value; i.e., the median particle diameter in $\mu$m.

As used herein, the term "Dv99" means that 99% by volume of the particles in the powder particle size distribution have a particle diameter that does not exceed the current value, and the unit is $\mu$m.

As used herein, the term "specific surface area (BET)" means the total surface area per unit mass of the material, in m$^2$/g.

As used herein, the term "gram capacity" means the amount of electricity that can be released per gram of positive electrode active material, in milliampere hours per gram (mAh/g). In the present application, the gram capacity value can be used as a reference indicator for measuring energy density.

In some embodiments, the A material is selected from at least one of:

Lithium manganese iron phosphate or lithium iron phosphate of chemical formula $LiMn_dFe_{1-d}PO_4$, wherein $0 \le d \le 0.9$; and
Lithium vanadium phosphate of chemical formula $Li_3V_2(PO_4)_3$.

By further selecting the above materials as the A materials, the positive electrode active material of the present application can be more cost effective with longer cycle life and excellent safety performance. In some embodiments, selecting a lithium manganese iron phosphate material of chemical formula $LiMn_dFe_{1-d}PO_4$, wherein optionally $0.1 \le d \le 0.9$, and more optionally $0.1 \le d \le 0.8$, can be more favorable for improving both the cycle life and gram capacity.

In some embodiments, for the A material, Dv99 < 31 $\mu$m, optionally Dv99$\le$28 $\mu$m, and optionally Dv99>4.2 $\mu$m; and more optionally 10 $\mu$m$\le$Dv99$\le$28 $\mu$m. By controlling the Dv99 of the A material within the above range, on the basis of improving the performance of the positive electrode active material, the slurry processability of the material can also be ensured, so that the coating interface of the slurry on the current collector is more uniform, which is helpful to further improve the positive electrode sheet and the battery performance.

In some embodiments, the A material has a BET of 8 m$^2$/g to 26 m$^2$/g, optionally 10 m$^2$/g to 24 m$^2$/g, and more optionally 10 m$^2$/g to 23 m$^2$/g. By controlling the BET of the A material within the above range, the electrochemical reaction area can be effectively limited, thus reducing and suppressing the interfacial side reactions during cycling, decreasing the cycle attenuation rate, and extending the cycle life.

In some embodiments, the particle surface of the A material may further have a carbon cladding layer of 0.5-5 wt%, and optionally 1-2 wt%, based on the total weight of the A material. Such a carbon cladding layer enables a more uniform mixing of the A material with the B material, and after mixing, it is helpful to optimize the conductive network of the material particles, thus reducing the resistance of the electrode sheet, and ensuring the proper utilization of the gram capacity.

In some embodiments, in the positive electrode active material of the present application, the B material is present in a mixing ratio of 3 wt% to 50 wt%, based on the total weight of the positive electrode active material. By mixing the B material with the A material in such a mixing ratio, it is possible to obtain a positive electrode active material having an improved gram capacity as compared with the A material alone without significantly losing the cycle life advantage of the A material.

In some embodiments, optionally the B material is present in a mixing ratio of 5 wt% to 30 wt%, based on the total weight of the positive electrode active material. By further selecting the mixing ratio range of the B material, the gram capacity and/or cycle life of the positive electrode active material can be further improved.

In some embodiments, for the B material of chemical formula (ii) $LiNi_aCo_bE_{1-a-b}O_2$, $0.5 \leq a \leq 0.98$, optionally $0.50 \leq a \leq 0.90$, more optionally $0.50 \leq a \leq 0.88$, and still more optionally $0.55 \leq a \leq 0.88$; and/or $0.005 \leq b \leq 0.30$, optionally $0.05 < b < 0.30$, and more optionally $0.05 < b < 0.20$. By controlling a and b in the general formula of the B material within the above range, it is helpful to further improve the gram capacity and cycle life of the positive electrode active material obtained by mixing the material A with the material B.

In some embodiments, for the above B material of chemical formula (ii) $LiNi_aCo_bE_{1-a-b}O_2$, the relationship of a and b therein is as follows: $k = (a+b)/(1-a-b)$, $1.5 \leq k \leq 99$, and optionally $1.5 \leq k \leq 19$. By limiting the factor k within the above range, the gram capacity and/or cycle life can be further improved.

In some embodiments, the k has the following relationship with the mixing ratio m of the A material (based on the total weight of the positive electrode active material): $k*m \geq 1$, optionally $k*m \geq 1.1$, and more optionally $k*m \geq 1.6$. When k*m is within the above range, the positive electrode active material has more favorable gram capacity and cycle life.

Controlling a, b, and k in the chemical formula of the B material within the above range can significantly improve the gram capacity and/or electronic conductivity and ionic conductivity of the positive electrode active material of the present application and/or the kinetics of the material without significantly losing the cycle life advantage of the material.

In some embodiments, the B material is $LiNi_aCo_bMn_{1-a-b}O_2$, $LiNi_aCo_bAl_{1-a-b}O_2$, $LiNi_aCo_bMn_cAl_{1-a-b-c}O_2$, or a combination thereof, wherein a and b are as defined above, and $0.01 \leq c \leq 0.34$. By selecting the above-mentioned B material, the gram capacity and/or cycle life of the positive electrode active material can be further improved.

In various embodiments of the present application, the B material may be a single crystal or a single crystal-like material, or may be a secondary particle (or a polycrystalline material).

In some embodiments, the B material is a single crystal or a single crystal-like material, the particle of which has a Dv50 of 2 $\mu$m to 4.5 $\mu$m, optionally 2.1 $\mu$m to 4.4 $\mu$m, and more optionally 3.5 $\mu$m to 4.4 $\mu$m.

In the case of single crystal or single crystal-like materials, in some embodiments, the B material has a BET of 0.40 m$^2$/g to 1.20 m$^2$/g, optionally 0.55 m$^2$/g to 0.95 m$^2$/g, and more optionally 0.55 m$^2$/g to 0.89 m$^2$/g.

In the case of single crystal or single crystal-like materials, controlling the particle size and specific surface area of the B material within the above ranges can improve the utilization of the gram capacity of the positive electrode active material obtained after mixing. Specifically, by controlling the B material in such a particle size range, it is helpful to reduce the diffusion path and bulk diffusion resistance of lithium ions, reduce the polarization of the material, and improve the capacity utilization of the positive electrode active material of the present application.

In the case of single crystal or single crystal-like materials, in some embodiments, for the B material, Dv99≤18 $\mu$m, optionally Dv99≤16 $\mu$m, optionally Dv99>4.4 $\mu$m, and more optionally 10.5 $\mu$m≤Dv99≤15 $\mu$m. Controlling Dv99 within the above range can improve the slurry processability of the positive electrode active material of the present application, and further improve the positive electrode sheet and the battery performance.

Alternatively, in some embodiments, the B material is a secondary particle (or a polycrystalline material), and the secondary particle has a Dv50 of 3.5 $\mu$m to 13 $\mu$m, and optionally 3.5 $\mu$m to 12 $\mu$m.

In the case of secondary particles, in some embodiments, the B material has a BET of 0.31 m$^2$/g to 1.51 m$^2$/g, and optionally 0.54 m$^2$/g to 1.51 m$^2$/g.

Generally, the primary particles that form the secondary particles by agglomeration have an average particle diameter range of primary particles, that is conventional for such materials in the art, for example 50-800 nm.

In the case of secondary particles, by limiting the particle size of the B material within the above range, it is possible to reduce the diffusion path and bulk diffusion resistance of lithium ions, reduce the polarization of the material, and improve the capacity utilization of the positive electrode active material of the present application. Furthermore, by controlling the specific surface area, it is possible to reduce the interfacial side reactions and reduce the battery life deterioration caused by the consumption of active lithium.

In the case of secondary particles, in some embodiments, the B material has a Dv99 of 10 $\mu$m to 25 $\mu$m. Controlling the specific surface area enables the secondary particles of the B material to have good compactness, and avoids the deterioration of energy density caused by the low overall compaction of the mixed system due to the poor compaction of part of core-shell structures and hollow materials.

As above, by further selecting B material and relevant parameters, the performance of the positive electrode active material of the present application can be further improved, for example, the gram capacity can be improved with due consideration given to good cycle life.

In some embodiments, the positive electrode active material of the present application is comprised of one or more A materials and one or more B materials.

In some embodiments, the A material and the B material are mixed by conventional physical mixing (for example, stirring and mixing using a stirring tank) to obtain the positive electrode active material of the present application.

**Positive electrode sheet**

In one embodiment of the present application, the present application proposes a positive electrode sheet comprising a current collector and an electrode sheet material layer provided on at least one surface of the current collector, wherein the electrode sheet material layer comprises the positive electrode active material of the present application. The positive electrode sheet of the present application has improved gram capacity and good cycle life, as well as lower resistance.

As an example, the positive electrode current collector has two opposite surfaces in its own thickness direction, and the positive electrode material layer is provided on either one or both of the two opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), polyethylene (PE), and the like).

In some embodiments, the positive electrode material layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode material layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode sheet can be prepared by: dispersing the components for preparing the positive electrode sheet, for example, the positive electrode active material, the conductive agent, the binder and any other components in a solvent (for example, N-methyl pyrrolidone ) to form a positive electrode slurry; and coating the positive electrode slurry on a positive electrode current collector, followed by oven drying, cold pressing and other procedures, to obtain the positive electrode sheet.

**Secondary battery, battery module, battery pack and electrical apparatus**

Hereinafter, the secondary battery, the battery module, the battery pack, and the electrical apparatus of the present application will be described with appropriate reference to the accompanying drawings.

In one embodiment of the present application, there is provided a secondary battery comprising the positive electrode active material of the present application or the positive electrode sheet of the present application.

In some embodiments, the secondary battery is a lithium-ion secondary battery.

Generally, the secondary battery includes a positive electrode sheet, a negative electrode sheet, an electrolyte, and a separator. During charging and discharging of the battery, active ions are intercalated and deintercalated back and forth between the positive electrode sheet and the negative electrode sheet. The electrolyte serves to conduct ions between the positive electrode sheet and the negative electrode sheet. The separator is provided between the positive electrode sheet and the negative electrode sheet, and mainly functions to prevent a short circuit between the positive electrode and the negative electrode while allowing ions to pass through.

[Negative electrode sheet]

The negative electrode sheet comprises a negative electrode current collector and a negative electrode material layer provided on at least one surface of the negative electrode current collector, and the negative electrode material layer comprises a negative electrode active material.

As an example, the negative electrode current collector has two opposite surfaces in its own thickness direction, and the negative electrode material layer is provided on either one or both of the two opposite surfaces of the negative electrode current collector.

In some embodiments, the negative electrode current collector can be a metal foil or a composite current collector. For example, a copper foil may be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), polyethylene (PE), and the like).

In some embodiments, the negative electrode active material may be a negative electrode active material for batteries known in the art. As an example, the negative electrode active material may include at least one of artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode material layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode material layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode material layer further optionally comprises other auxiliaries, for example, a thickener (e.g., sodium carboxymethyl cellulose (CMC-Na)) and the like.

In some embodiments, the negative electrode sheet can be prepared by: dispersing the components for preparing the negative electrode sheet, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode sheet.

[Electrolyte]

The electrolyte serves to conduct ions between the positive electrode sheet and the negative electrode sheet. The type of the electrolyte is not particularly limited in the present application, and can be selected according to requirements. For example, the electrolyte may be in a liquid state, a gel state, or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. For example, the additive may include a negative electrode film-forming additive, a positive electrode film-forming additive, and also an additive capable of improving certain properties of the battery, such as an additive for improving the overcharge performance of the battery, and an additive for improving the high-temperature or low-temperature performance of the battery, etc.

[Separator]

In some embodiments, the secondary battery further includes a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, and there is no particular limitation.

In some embodiments, the positive electrode sheet, the negative electrode sheet, and the separator can be made into an electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and examples of the plastic include polypropylene, polybutylene terephthalate and polybutylene succinate, etc.

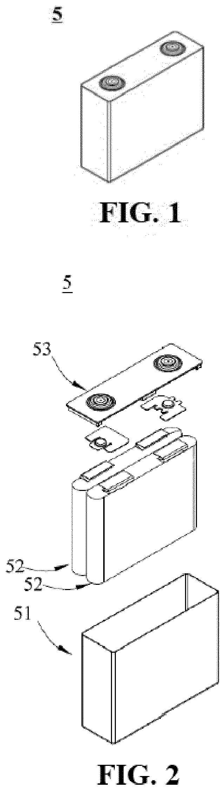

The shape of the secondary battery is not particularly limited in the present application, and it may be cylindrical, square, or any other shape. For example, Fig. 1 shows a secondary battery 5 with a square structure as an example.

In some embodiments, referring to Fig. 2, the outer package may comprise a case 51 and a cover plate 53. Here, the case 51 may include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode sheet, the negative electrode sheet, and the separator can be formed into an electrode assembly 52 by a winding process or a lamination process. The electrode assembly 52 is encapsulated within the accommodating cavity. The electrolyte solution impregnates the electrode assembly 52. The number of electrode assemblies 52 comprised in the secondary battery 5 may be one or more, which can be selected by those skilled in the art according to specific actual requirements.

In one embodiment of the present application, there is provided a battery module comprising the secondary battery of the present application.

In some embodiments, the secondary batteries can be assembled into a battery module, and the number of secondary batteries comprised in the battery module may be one or more, and the specific number can be selected by those skilled in the art according to the application and capacity of the battery module.

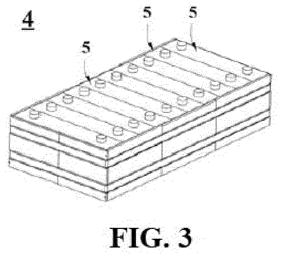

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 can further include a case having an accommodating space, in which the plurality of secondary batteries 5 are accommodated.

In one embodiment of the present application, there is provided a battery pack comprising the battery module of the present application.

In some embodiments, the above-mentioned battery modules may further be assembled into a battery pack, and the number of battery modules comprised in the battery pack may be one or more, and the specific number can be selected by those skilled in the art according to the application and capacity of the battery pack.

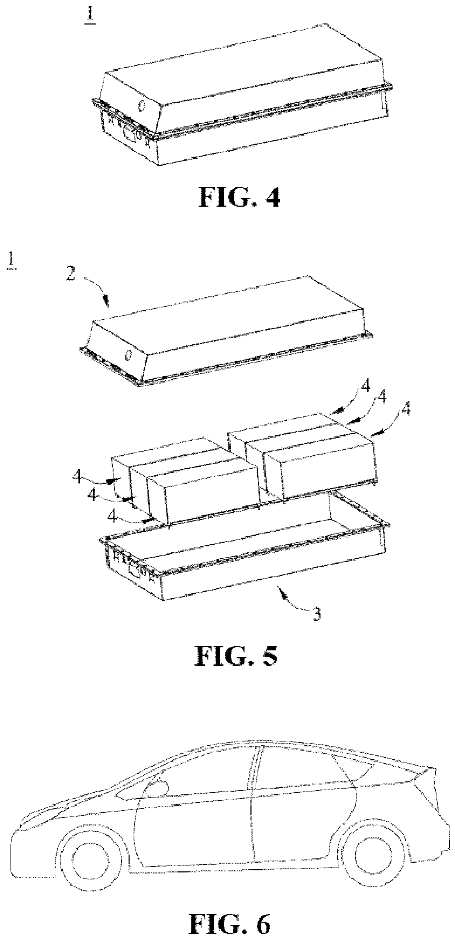

Fig. 4 and Fig. 5 show a battery pack 1 as an example. Referring to Fig. 4 and Fig. 5, the battery pack 1 may comprise a battery box and a plurality of battery modules 4 provided in the battery box. The battery box includes an upper box 2 and a lower box 3, wherein the upper box 2 may cover the lower box 3, and forms an enclosed space for accommodating the battery module 4. The plurality of battery modules 4 may be arranged in the battery box in any manner.

Additionally, the present application further provides an electrical apparatus comprising at least one of the secondary battery, battery module or battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

**Examples**

Hereinafter, examples of the present application will be described. The examples described below are exemplary and only used to explain the present application, and are not to be construed as limiting the present application. Where specific techniques or conditions are not specified in the examples, the techniques or conditions described in the literatures of the art or the product specifications are followed. Where manufacturers are not specified, the reagents or instruments used are conventional products and are commercially available.

Method:

1. Preparation method of secondary battery

(1) Preparation of positive electrode sheet:

In the following Examples (serial number indicated by a number, e.g., Example 1) and Comparative Examples (serial number indicated by a "C+number", e.g., Comparative Example C1), the A material and the B material were stirred and mixed in a stirring device (such as a stirring tank), and the resulting mixture was used as the positive electrode active material of the present application. The mixing ratio m of the A material was the weight percentage based on the total weight of the positive electrode active material, and $m=M_A/(M_A+M_B+Mc......)*100\%$, wherein $M_A$, $M_B$, Mc, etc. were the masses of the individual components used for mixing to obtain the positive electrode active material, such as A material, B material, (if any) C material, etc., respectively.

The positive electrode active material, the binder polyvinylidene fluoride (PVDF), and the conductive carbon Super-P were added to the solvent N-methyl pyrrolidone (NMP), so that the mass ratio of the positive electrode active material, PVDF, and the conductive carbon was 90 : 5 : 5, and with stirring in a drying room, a homogeneous slurry with a viscosity of 3000 to 10000 mPa S was obtained, which was then coated on an aluminum foil at a loading of $20mg/cm^2$, dried and cold pressed to obtain the positive electrode sheet.

(2) Preparation of negative electrode sheet:

Artificial graphite as the negative electrode active material, sodium carboxymethyl cellulose (CMC), the conductive carbon Super-P and styrene butadiene rubber (SBR) were added in a mass ratio of 94: 1.5: 2: 2.5 to deionized water, and with stirring in a drying room, a homogeneous slurry with a viscosity of 2000 to 12000 mPa S was obtained. The above slurry was then coated on a current collector copper foil at a coating mass to form a coated electrode sheet. The coated electrode sheet was dried and cold pressed to obtain the negative electrode sheet.

The coating mass was calculated by the following relationship:

$$94\%*\text{negative electrode coating mass}*\text{graphite gram capacity} = 1.15*90\%*\text{positive electrode}$$

$$\text{coating mass}*[(x1*w1+x2*w2)/(w1+w2)];$$

Wherein,

The gram capacity of graphite was 350 mAh/g,
x1 and x2 are the gram capacities of the A material and the B material, respectively, as measured according to the following "Powder electricity deduction test of lithium half battery".
w1 and w2 are the blending ratios of the A material and the B material, respectively (weight percentage based on the total weight of the positive electrode active material obtained by blending).

(3) Electrolyte solution:

A 1 mol/L solution was formulated by adding $LiPF_6$ to a mixed solution of ethylene carbonate (EC), diethyl carbonate (DEC) and dimethyl carbonate (DMC) in a volume ratio of 1:1:1, and then 5 wt.% fluoroethylene carbonate (FEC) was added to obtain the electrolyte solution. Here, the weight percentage of FEC added is based on the total weight of the electrolyte solution.

(4) Separator:

A porous film made of polyethylene (PE) was used as the separator.

(5) Preparation of secondary battery:

In the drying room, the secondary battery was assembled for testing by such processes as electrode sheet die cutting, electrode tab cleaning, lamination, welding, top sealing, liquid injection, pre-formation, air extraction, formation, molding, and the like.

2. Test method for powder electricity deduction of lithium half battery

The material to be tested (for example, the A material or the B material) (in powder form), the binder polyvinylidene fluoride (PVDF) and the conductive carbon Super-P were added to the solvent N-methyl pyrrolidone (NMP), so that the mass ratio of the material to be tested, PVDF and the conductive carbon was 90: 5: 5. In the drying room, a homogenous slurry with a viscosity of 3000 to 10000 mPa·S was prepared by stirring with the use of a homogenizer (R30A, FLUKO, germany), and the above slurry was then coated on an aluminum foil at a loading of 20 mg/cm$^2$, dried and cold pressed to obtain the positive electrode sheet.

The positive electrode sheet, a PP separator (Celgard, 2400), a metallic lithium sheet (Tianjin Lithium Energy Co. LTD, diameter 15.6 mm, thickness 450 $\mu$m, purity > 99.9%), and 100$\mu$L of an electrolyte solution (the electrolyte solution was formulated by adding LiPF$_6$ to a mixed solution of ethylene carbonate (EC), diethyl carbonate (DEC) and dimethyl carbonate (DMC) in a volume ratio of 1:1:1 to prepare a 1 mol/L solution, and then adding 5 wt.% fluoroethylene carbonate (FEC) thereto), were assembled into a button half battery (vs lithium) in a glove box (Braun company, Ar atmosphere) with CR 2032 button battery assembly (Guangdong Canrd New Energy Technology Co., Ltd, made of 304 stainless steel), and after the half battery was taken out of the glove box, it was allowed to stand at ambient temperature for 12h, and then the capacity test was conducted as follows:

The test instrument was CT2001A LAND (LAND LANHE); the half battery (vs lithium) prepared as described above was allowed to stand at a constant ambient temperature of 25°C for 5min, and then discharged to 2.5V at 1/3C (C represents the rate of charging-discharging capability, 1C represents the current intensity at which full discharge is completed in 1 hour, and charge-discharge rate of battery = charge-discharge current/rated capacity; herein, C can also be directly understood as a nominal capacity), and after standing for another 5min, it was charged to 4.35V or 4.3V at 1/3C onstant current and constant voltage (wherein when the B material was a single crystal or a single crystal-like material with a chemical formula of LiNi$_a$Co$_b$E$_{1-a-b}$O$_2$, and a$\leq$0.7, the upper charge voltage was 4.35V; and when the B material was a single crystal or a single crystal-like material with a chemical formula of LiNi$_a$Co$_b$E$_{1-a-b}$O$_2$ and a>0.7, or was a secondary particle (a polycrystalline material), the upper charge voltage was 4.30V), and then charged at a constant voltage of 4.35V or 4.3V respectively to a current of $\leq$0.05 mA, and was allowed to stand for 5min, at which time the charge capacity was denoted as C0; and then discharged at 1/3C0 to 2.5V, at which time the discharge capacity was initial discharge capacity, which was denoted as D0.

For each of the material samples, the initial gram capacity of the tested material sample was calculated according to the following formula:

$$\text{Initial gram capacity of tested material} = D0 \text{ / mass of positive electrode active material}$$

corresponding to tested battery cell.

The initial gram capacities of 5 parallel samples were tested and calculated, from which the maximum and minimum values were removed, and the remaining 3 data were averaged to obtain the initial gram capacity of the material to be tested.

In the above formula, "the mass of the positive electrode active material corresponding to the tested battery cell" is determined according to the following "mass test of the active material of the positive electrode sheet".

3. Test method for the mass of the active material of the positive electrode sheet

The positive electrode sheet to be tested was die cut into a disc with a diameter of 14 mm as the sample to be tested (the approximate area thereof was 154 mm$^2$ by calculation), and at the same time, the current collector used for preparing the electrode sheet to be tested was also die cut into a disc with a diameter of 14 mm as a blank sample.

20 blank samples were weighed to obtain a total weight, and the total mass was divided by the corresponding number to obtain the average mass $m_0$ of the blank samples (that is, the current collectors of the electrode sheets) in grams (g). Then 20 samples to be tested were weighed respectively, and denoted in turn as $m_1$, $m_2$, $m_3$......$m_{20}$ in g.

The positive electrode sheet of the laminated battery cell prepared with such electrode sheet had a length a and a width b in mm; then the mass of the active material of the positive electrode sheet of the laminated battery cell was calculated as follows:

$$\text{Mass of active material} = 90\% * \{[(m_1 + m_2 + m_3 \ldots \ldots + m_{20})/20] - m_0\} * (a*b)/154.$$

4. Test method for initial gram capacity of positive electrode active material in secondary battery

The test instrument was CT 4000-5V6A NEW ARE (Neware Technology Limited Company). The secondary batteries prepared as described above were allowed respectively to stand at a constant ambient temperature of 25°C for 5min, and then discharged to 2.5V at 1/3C (C represents the rate of charging-discharging capability, 1C represents the current intensity at which full discharge is completed in 1 hour, and charge-discharge rate of battery = charge-discharge current/rated capacity; herein, C can also be directly understood as a nominal capacity), and after standing for another 5min, they were charged to 4.3V or 4.25V at 1/3C onstant current and constant voltage (wherein when the B material was a single crystal or a single crystal-like material with a chemical formula of $LiNi_aCo_bE_{1-a-b}O_2$, and $a \leq 0.7$, the upper charge voltage was 4.3V; and when the B material was a single crystal or a single crystal-like material with a chemical formula of $LiNi_aCo_bE_{1-a-b}O_2$, and $a > 0.7$, or was a secondary particle (a polycrystalline material), the upper charge voltage was 4.25V), and then charged at a constant voltage of 4.3V or 4.25V respectively to a current of $\leq 0.05mA$, and were allowed to stand for 5min, at which time the charge capacity was denoted as C0'; and then discharged at 1/3C0' to 2.5V, at which time the discharge capacity was initial discharge capacity, which was denoted as D0'.

The initial gram capacity of the positive electrode active material was calculated respectively for each of the secondary battery samples according to the following formula:

$$\text{Initial gram capacity of positive electrode active material} = D0' \text{ / mass of positive electrode active material;}$$

In the formula, "mass of positive electrode active material" is determined according to the method 3 above.

The initial gram capacities of 5 parallel samples were tested and calculated, from which the maximum value and the minimum value were removed, and the remaining 3 data were averaged to obtain the initial gram capacity of the secondary battery to be tested.

5. Test method for cycle performance of secondary battery at 25°C

The test instrument was CT 4000-5V6A NEW ARE (Neware Technology Limited Company). Each of the secondary batteries prepared as described above was charged respectively at 0.5C0' (C0' was measured by "test method for initial gram capacity of secondary battery") to 4.3V or 4.25V at a constant ambient temperature of 25°C and a test voltage of 2.5 to 4.3V or 2.5 to 4.25V (wherein, in the B material $LiNi_aCo_bE_{1-a-b}O_2$, when $a > 0.7$, or when the material was a secondary particle (polycrystalline), the test voltage was 2.5 to 4.25V; and when $a \leq 0.7$, and the material was a single crystal or a single crystal-like material, the test voltage was 2.5 to 4.3V), and then charged at a constant voltage of 4.3V or 4.25V to a current of $\leq 0.05mA$, and was allowed to stand for 5min, then discharged at 0.5C0' to 2.5V, and this was one cycle, the discharge capacity was denoted as $D_1$; the above operations were repeated, and the discharge capacity for n cycles was denoted as $D_n$ (n = 1, 2, 3......). The attenuation degree of the battery cell (State of health, SOH) = $D_n/D_3 * 100\%$ was calculated. The the number of cycles of the tested secondary battery when the battery cell capacity was attenuated to 70% SOH was recorded as the examination indicator of cycling capability.

Five parallel samples were tested, and the maximum value and minimum value of the cycle number were removed, and the remaining 3 samples were averaged to obtain the cycle number of the tested secondary battery when the final battery cell capacity was attenuated to 70% SOH.

In the present application, based on the test accuracy $\pm 5$, the measured values of cycle number were treated in such a way that 5 was as a whole and 10 was as a wholel. Specifically, the data processing method was as follows: dividing the actual measured cycle number by 5 to obtain a quotient and a remainder (if any). When the remainder is $\geq 3$, the recorded cycle number was (quotient * 5 + 5); and when the remainder is <3, the recorded cycle number was (quotient * 5).

6. Test method for electrode sheet resistance

The test instrument was GDW3-KDY-2 two-probe diaphragm resistance tester (Beijing Zhonghui Tiancheng Technology Co. LTD). A sample of 4cm*25cm was made from the positive electrode sheet prepared as described above in method 1 (1). The sample should have a good appearance (that is, the interface of the electrode sheet sample was uniform with no obvious color difference, metal leakage, decarburization, powder loss, scratches, etc.). The sample was vacuum dried at 85°C for 4 hours or more, and tested with the above resistance tester. The test pressure was 0.2-0.4 MPa, and 20 parallel samples were tested with a sample data acquisition time of t = 15s (because it took about 15s for the resistance meter to show stable data). A box plot was made for all the measured resistance data, and the median of the box plot was taken to obtain the electrode sheet resistance.

7. Powder laser particle size test method

Referring to the national standard GB/T19077-2016, a Mastersizer 3000 laser diffraction particle size analyzer (Malvern Panalytical Ltd) was used, in which deionized water was used as the solvent, and the positive electrode active material to be tested was ultrasonicated for 5 min before testing.

Through this test, it is possible to obtain the particle size distribution of the material, generally Dv10, Dv50, Dv90, Dv99 and their distribution curves. In the present application, the method was mainly used to measure the particle size distributions of single crystal or single crystal-like particles and secondary particles.

8. Test method of specific surface area (BET)

With reference to GB/T 19587-2004, the specific surface areas of various powdery materials involved in the present application were measured with specific surface area porosity analyzer TRISTAR II 3020 (Micromeritics Instrument Corporation, USA). Before measuring, the powder was placed in a vacuum oven at 200°C and drying for $\geq$2h, and the amount of powder to be weighed is > 20 g.

9. Test method for primary particle size

A sigma 300 scanning electron microscope (Zeiss AG) was used to test various powdery materials involved in the present application, the test sample and magnification were adjusted, so that there were more than 100 primary particles in the field of view; the size of the particle in the length direction was measured with a ruler, and a total of 100-200 primary particles were measured; and then after 1/10 of the particles with the maximum particle diameter and 1/10 of the particles with the minimum particle diameter were removed, the particle diameter data of the remaining 8/10 particles were used to calculate the average value, that is, the average particle diameter. In this way, the particle diameter range of the primary particles constituting the secondary particles was identified.

10. Test method for powder compacted density

Referring to GB/T 24533-2009 test, an equipment powder compacted density tester (model: YT-101F) was used, the powder sample amout was 1.0g, and the parallel samples were tested 3-5 times.

The calculation formula of compacted density was as follows:

$$pC = m/V = m/(S*H)$$

In the formula:

pC --- compacted density of powder, in g/cm;
m --- mass of test sample, in g;
S---bottom area of mold; herein, the test mold was assigned according to the equipment used, and its value was 1.327cm$^2$;
H---compacted thickness, in cm.

**Examples 1-7 and Comparative Examples C1-3**

In each of Examples 1-7 and Comparative Examples C1-3, the A material was $LiMn_{0.6}Fe_{0.4}PO_4$ (a LMFP material), which was a single crystal material with Dv50 of 1.1 $\mu$m, Dv99 of 25 $\mu$m, BET of 21 m$^2$/g and gram capacity of 140 mAh/g; and the B material was $LiNi_{0.55}Co_{0.12}Mn_{0.33}O_2$ (a NCM material), which was a single crystal-like (or a quasi-single crystal) material with Dv50 of 4.2 $\mu$m, Dv99 of 10.5 $\mu$m, BET of 0.55 m$^2$/g and gram capacity of 170 mAh/g.

Table 1 below shows the gram capacities and cycle lifes of the positive electrode active materials obtained by mixing the A material and the B material in different mixing ratios (25°C). Each mixing ratio in Table 1 below was a weight percentage based on the total weight of the A material and the B material.

Table 1

| | A material | B material | Positive electrode active material | |
|---|---|---|---|---|
| | Mixing ratio m | Mixing ratio | Gram capacity (mAh/g) | 25°C cycle life @70% SOH (cycles) |
| Comparative Example C1 | 100% | 0% | 140 | 3570 |
| Comparative Example C2 | 0% | 100% | 170 | 2000 |
| Comparative Example C3 | 98% | 2% | 138 | 3300 |
| Example 1 | 97% | 3% | 141 | 3580 |
| Example 2 | 95% | 5% | 142 | 3650 |
| Example 3 | 90% | 10% | 145 | 3850 |
| Example 4 | 80% | 20% | 146 | 3600 |
| Example 5 | 70% | 30% | 150 | 3280 |
| Example 6 | 65% | 35% | 151 | 3010 |
| Example 7 | 50% | 50% | 150 | 2500 |
| Comparative Example C4 | 45% | 55% | 154 | 1500 |

As can be seen from Table 1, compared with the use of the A material alone (Comparative Example C1), the positive electrode active materials of Examples 1-7 were obtained by mixing not less than 50 wt%, in particular 50 wt% to 97 wt% of the A material with the B material, and the positive electrode active materials of the present application have improved gram capacity and/or cycle performance. In particular, compared with the case of using the A material alone, the positive electrode active material obtained by mixing the A material in a mixing ratio m of optionally 65 wt% to 97 wt%, more optionally 70 wt% to 97 wt%, and still more optionally 80 wt% to 97 wt% with the B material has improved gram capacity and/or higher cycle performance.

**Examples 8-16**

Hereinafter, Table 2 shows the performance data of the positive electrode active materials prepared by mixing lithium iron phosphate or a different lithium manganese iron phosphate material (chemical general formula was $LiMn_dFe_{1-d}PO_4$) as the A material with NCM as the B material. Among them, in each of the following Examples, the B material (chemical formula is $LiNi_{0.55}Co_{0.12}Mn_{0.33}O_2$) has the following parameters: a gram capacity of 170 mAh/g, a Dv50 of 4.2 $\mu$m, a Dv99 of 10.5 $\mu$m, and a BET of 0.55 $m^2$/g. Among them, in each of the following Examples, based on the total weight of the positive electrode active material, the mixing ratio m of the A material was 80 wt%, and the mixing ratio of the B material was 20 wt%.

Table 2

| Examples | A material ($LiMn_dFe_{1-d}PO_4$) | | | | | | Positive electrode active material | |
|---|---|---|---|---|---|---|---|---|
| | d | Gram capacity mAh/g | 25°C cycle life @70% SOH cycles | Dv50 $\mu$m | Dv99 $\mu$m | BET $m^2$/g | Gram capacity mAh/g | 25°C cycle life @70% SOH cycles |
| 8 | 0 | 145 | 3530 | 1.0 | 10.0 | 23.0 | 153 | 3450 |
| 9 | 0.1 | 145 | 3535 | 1.1 | 12.8 | 145 | 152 | 3540 |
| 10 | 0.2 | 145 | 3540 | 1.0 | 11.5 | 145 | 151 | 3545 |
| 11 | 0.4 | 144 | 3545 | 0.9 | 12.3 | 22.5 | 151 | 3550 |
| 12 | 0.5 | 141 | 3550 | 1.2 | 22.5 | 20.0 | 147 | 3585 |

(continued)

| Examples | A material ($LiMn_dFe_{1-d}PO_4$) | | | | | | Positive electrode active material | |
|---|---|---|---|---|---|---|---|---|
| | d | Gram capacity mAh/g | 25°C cycle life @70% SOH cycles | Dv50 μm | Dv99 μm | BET m²/g | Gram capacity mAh/g | 25°C cycle life @70% SOH cycles |
| 13 | 0.6 | 140 | 3570 | 1.1 | 25.0 | 21.0 | 146 | 3600 |
| 14 | 0.8 | 138 | 3150 | 1.0 | 19.0 | 22.6 | 145 | 3200 |
| 15 | 0.9 | 135 | 2860 | 1.1 | 23.0 | 21.3 | 141 | 3130 |
| 16 | 1 | 130 | 2100 | 1.0 | 23.0 | 22.5 | 128 | 1430 |

As can be seen from Table 2, when the value of d in the chemical formula $LiMn_dFe_{1-d}PO_4$ of the A material was in the range of 0 to 0.9, the positive electrode active material obtained by mixing with the B material has improved gram capacity and good cycle life. When the A material was a lithium manganese iron phosphate material, and the value of d in the above chemical formula was in the range of 0.1-0.9, optionally 0.1-0.8, the positive electrode active material of the present application has both improved gram capacity and cycle life, and its gram capacity and cycle life values are relatively high.

**Examples 17-31 and Comparative Examples C5-C6**

The A material was selected from the following materials or a mixture thereof: $LiMn_{0.6}Fe_{0.4}PO_4$ (denoted by LMFP in Table 3), $LiFePO_4$ (denoted by LFP in Table 3) and $Li_3V_2(PO_4)_3$ (denoted by LVP in Table 3); also, in Table 3 below, when the A material was a mixture of the above materials, it was expressed as, for example, LFP+LMFP (that is, a mixture of $LiMn_{0.6}Fe_{0.4}PO_4$ and $LiFePO_4$).

In Example 24, the A material was a mixture obtained by mixing a LFP material as expressed above (with a gram capacity of 145 mAh/g, a Dv50 of 1 μm, a Dv99 of 10 μm, and a BET of 23 m²/g) with a LMFP material as expressed above (with a gram capacity of 140 mAh/g, a Dv50 of 1.1 μm, a Dv99 of 25 μm, and a BET of 21 m²/g) in a weight ratio of 1:1.

In Example 25, the A material was a mixture obtained by mixing a LFP material as expressed above (with a gram capacity of 145 mAh/g, a Dv50 of 1 μm, a Dv99 of 10 μm, and a BET of 23 m²/g) with a LMFP material as expressed above (with a gram capacity of 140 mAh/g, a Dv50 of 1.1 μm, a Dv99 of 25 μm, and a BET of 21 m²/g) in a weight ratio of 2:8.

The B material was selected from the following single crystal or single crystal-like materials or a mixture thereof: $LiNi_{0.55}Co_{0.12}Mn_{0.33}O_2$ (denoted by NCM in Table 3), $LiNi_{0.55}Co_{0.12}Mn_{0.18}Al_{0.15}O_2$ (denoted by NCMA-1 in Table 3), $LiNi_{0.55}Co_{0.12}Mn_{0.31}Al_{0.02}O_2$ (denoted by NCMA-2 in Table 3), $LiNi_{0.55}Co_{0.12}Mn_{0.03}Al_{0.3}O_2$ (denoted by NCMA-3 in Table 3) and $LiNi_{0.55}Co_{0.15}Mn_{0.15}Al_{0.15}O_2$ (denoted by NCMA-4 in Table 3). In each of the following Examples, the A material was blended with the B material in a blending ratio m of 80 wt%, which was based on the total weight of the positive electrode active material.

In Example 26, the B material was a mixture obtained by mixing an NCM material as expressed above (with a gram capacity of 170 mAh/g, a Dv50 of 4.2 μm, a Dv99 of 10.5 μm, and a BET of 0.55 m²/g) with an NCMA-4 material as expressed above (with a gram capacity of 172 mAh/g, a Dv50 of 3.9 μm, a Dv99 of 11.0 μm, and a BET of 0.65 m²/g) in a weight ratio of 1:1.

Table 3 below shows the gram capacities and cycle lifes of the positive electrode materials obtained by mixing the A material having different Dv50 and/or Dv99 and/or BET with the B material (25°C). Each mixing ratio was a weight percentage based on the total weight of the positive electrode active material.

Table 3:

| | A material | | | | | | B material | | | | | Positive electrode active material | | |
|---|---|---|---|---|---|---|---|---|---|---|---|---|---|---|
| | Material | Gram capacity mAh/g | 25°C cycle life @70% SOH (cycles) | Dv50 μm | Dv99 μm | BET m$^2$/g | Material | Gram capacity mAh/g | Dv50 μm | Dv99 μm | BET m$^2$/g | Gram capacity mAh/g | 25°C cycle life @70% SOH (cycles) | Electrode sheet film resistance/Ω |
| Comparative Example C5 | LMFP | 143 | 3400 | 0.7 | 12 | 26 | NCM | 170 | 4.2 | 10.5 | 0.55 | 148 | 1780 | 0.232 |
| Example 17 | LMFP | 143 | 3500 | 0.8 | 15 | 24 | NCM | 170 | 4.2 | 10.5 | 0.55 | 148 | 2680 | 0.232 |
| Example 18 | LMFP | 142 | 3520 | 0.9 | 20 | 23 | NCM | 170 | 4.2 | 10.5 | 0.55 | 148 | 2800 | 0.251 |
| Example 19 | LFP | 145 | 3530 | 1 | 10 | 23 | NCM | 170 | 4.2 | 10.5 | 0.55 | 153 | 3450 | 0.243 |
| Example 20 | LMFP | 140 | 3570 | 1.1 | 25 | 21 | NCM | 170 | 4.2 | 10.5 | 0.55 | 146 | 3600 | 0.263 |
| Example 21 | LMFP | 140 | 3570 | 1.1 | 25 | 21 | NCMA-1 | 172 | 3.9 | 11 | 0.65 | 149 | 3580 | 0.273 |
| Example 22 | LMFP | 140 | 3570 | 1.1 | 25 | 21 | NCMA-2 | 171 | 4 | 12 | 0.58 | 149 | 3530 | 0.281 |
| Example 23 | LMFP | 140 | 3570 | 1.1 | 25 | 21 | NCMA-3 | 173 | 3.8 | 10.5 | 0.69 | 150 | 3490 | 0.27 |
| Example 24 | LFP + LMFP (1:1) | 143 | 3600 | 1.05 | 17.5 | 22 | NCM | 170 | 4.2 | 10.5 | 0.55 | 148 | 3510 | 0.265 |
| Example 25 | LFP + LMFP (2:8) | 143 | 3570 | 1.08 | 13 | 21.4 | NCM | 170 | 4.2 | 10.5 | 0.55 | 147 | 3480 | 0.282 |
| Example 26 | LMFP | 140 | 3550 | 1.1 | 25 | 21 | NCM+ NCMA-4 (1:1) | 170 | 4.1 | 11 | 0.6 | 148 | 3310 | 0.285 |
| Example 27 | LVP | 133 | 3510 | 1.2 | 12 | 20 | NCM | 170 | 4.2 | 10.5 | 0.55 | 141 | 3000 | 0.423 |
| Example 28 | LMFP | 138 | 3450 | 1.5 | 27 | 12 | NCM | 170 | 4.2 | 10.5 | 0.55 | 143 | 3050 | 0.266 |
| Example 29 | LMFP | 135 | 3200 | 2.3 | 28 | 10 | NCM | 170 | 4.2 | 10.5 | 0.55 | 140 | 2720 | 0.337 |
| Example 30 | LFP | 135 | 2950 | 3.2 | 15 | 12 | NCM | 170 | 4.2 | 10.5 | 0.55 | 140 | 2700 | 0.365 |
| Example 31 | LMFP | 131 | 2550 | 4.2 | 18 | 10.5 | NCM | 170 | 4.2 | 10.5 | 0.55 | 140 | 2500 | 0.375 |

(continued)

| | A material | | | | | | B material | | | | | Positive electrode active material | | |
|---|---|---|---|---|---|---|---|---|---|---|---|---|---|---|
| | Material | Gram capacity mAh/g | 25°C cycle life @70% SOH (cycles) | Dv50 µm | Dv9 µm | BET m²/g | Material | Gram capacity mAh/g | Dv50 µm | Dv9 µm | BET m²/g | Gram capacity mAh/g | 25°C cycle life @70% SOH (cycles) | Electrode sheet film resistance/Ω |
| Comparative Example C6 | LMFP | 130 | 1550 | 4.3 | 31 | 7.9 | NCM | 170 | 4.2 | 10.5 | 0.55 | 125 | 1300 | 0.405 |

As can be seen from Table 3, when the Dv50 of the A material was in the range of 0.8 $\mu$m to 4.2 $\mu$m, the positive electrode active material of the present application could have both good gram capacity and cycle life compared with the use of the A material alone, that is, the gram capacity was increased without significantly losing the cycle life. However, beyond this range, the resulting positive electrode active material had poor overall properties (i.e., unbalanced performance) (for example, when the Dv50 was 0.7 $\mu$m, while the gram capacity was improved, the cycle life was greatly reduced to an unacceptable level), rendering such a material impractical. In particular, when the Dv50 of the A material was in the range of 0.9 $\mu$m to 2.3 $\mu$m, optionally 1 $\mu$m to 1.5 $\mu$m, the positive electrode active material of the present application had improved gram capacity and longer cycle life.

**Examples 32-54 and Comparative Examples C7-C11**

In each of the following Examples 32-54 and Comparative Examples C7-C11, the A material was $LiMn_{0.6}Fe_{0.4}PO_4$ (denoted as LMFP in Table 4), which was a single crystal material with a Dv50 of 1.1 $\mu$m, a Dv99 of 25 $\mu$m, a BET of 21 $m^2$/g, a gram capacity of 140 mAh/g, and a cycle life of 3570 cycles. In each of the Examples and Comparative Examples in Table 4, the mixing ratio m of the A material was 80 wt% based on the total weight of the positive electrode active material.

The B material was $LiNi_aCo_bMn_{1-a-b}O_2$, wherein its single crystal material particles had a Dv50 of 2.7-5.6 $\mu$m, a Dv99 of 5.4-34.5 $\mu$m and a BET of 0.45 - 1.05 $m^2$/g; and its polycrystalline material particles (i.e., secondary particles) had a Dv50 of 9.2-12.5 $\mu$m, a Dv99 of 20-30.5 $\mu$m and a BET of 0.32-0.54 $m^2$/g. The primary particles that agglomerate to constitute secondary particles were 50-800 nm in size. The mixing ratio of the B material was 20 wt%, based on the total weight of the positive electrode active material.

Table 4 below shows the gram capacities and cycle lifes of the positive electrode materials obtained by mixing the A material with the B material having different a and b values, as well as different k*m values (25°C).

Table 4

| | A material | | | B material: $LiNi_aCo_bMn_{1-a-b}O_2$ | | | | | | | | | | Positive electrode active material | |
|---|---|---|---|---|---|---|---|---|---|---|---|---|---|---|---|
| | Material | Gram capacity mAh/g | 25°C cycle life @70% SOH cycles | Material type | Gram capacity mAh/g | Dv50 μm | Dv99 μm | BET m²/g | a | b | 1-a-b | k=(a+b)/(1-a-b) | k*m | Gram capacity mAh/g | 25°C cycle life @70% SOH (cycles) |
| Comparative Example C7 | LMFP | 140 | 3570 | Single crystal | 148 | 5.6 | 34.5 | 0.45 | 0.33 | 0.23 | 0.44 | 1.27 | 1.02 | 138 | 1950 |
| Comparative Example C8 | LMFP | 140 | 3570 | Single crystal | 165 | 4.0 | 10.6 | 0.60 | 0.5 | 0.05 | 0.45 | 1.22 | 0.98 | 147 | 2250 |
| Example 32 | LMFP | 140 | 3570 | Single crystal | 165 | 4.1 | 10.7 | 0.58 | 0.5 | 0.3 | 0.2 | 4.00 | 3.20 | 146 | 3700 |
| Example 33 | LMFP | 140 | 3570 | Single crystal | 172 | 3.7 | 15 | 0.95 | 0.55 | 0.05 | 0.4 | 1.50 | 1.20 | 144 | 3550 |
| Example 34 | LMFP | 140 | 3570 | Single crystal | 170 | 3.8 | 9.5 | 0.63 | 0.55 | 0.12 | 0.33 | 2.00 | 1.60 | 146 | 3600 |
| Example 35 | LMFP | 140 | 3570 | Single crystal | 170 | 2.7 | 5.4 | 1.05 | 0.55 | 0.2 | 0.25 | 3.00 | 2.40 | 148 | 4150 |
| Example 36 | LMFP | 140 | 3570 | Single crystal | 180 | 3.9 | 10.1 | 0.61 | 0.6 | 0.2 | 0.2 | 4.00 | 3.20 | 150 | 4100 |

| | A material | | | B material: $LiNi_aCo_bMn_{1-a-b}O_2$ | | | | | | | | | | Positive electrode active material | |
|---|---|---|---|---|---|---|---|---|---|---|---|---|---|---|---|
| | Material | Gram capacity mAh /g | 25°C cycle life @70% SOH cycles | Material type | Gram capacity mAh/ g | Dv50 μm | Dv99 μm | BET m²/g | a | b | 1-a-b | k= (a+b)/ (1-a-b) | k*m | Gram capacity mAh/g | 25°C cycle life @70% SOH (cycles) |
| Example 37 | LMFP | 140 | 3570 | Single crystal | 190 | 3.5 | 14.0 | 0.89 | 0.7 | 0.05 | 0.25 | 3.00 | 2.40 | 150 | 3720 |
| Example 38 | LMFP | 140 | 3570 | Single crystal | 193 | 3.7 | 11.5 | 0.79 | 0.75 | 0.07 | 0.18 | 4.60 | 3.68 | 152 | 3870 |
| Example 39 | LMFP | 140 | 3570 | Poly crystalline | 203 | 9.2 | 20.0 | 0.54 | 0.83 | 0.12 | 0.05 | 19.00 | 15.20 | 154 | 4250 |
| Example 40 | LMFP | 140 | 3570 | Poly crystalline | 207 | 9.2 | 20.0 | 0.54 | 0.88 | 0.05 | 0.07 | 13.30 | 10.64 | 155 | 4065 |
| Example 41 | LMFP | 140 | 3570 | Poly crystalline | 210 | 10.5 | 25.0 | 0.41 | 0.9 | 0.05 | 0.05 | 19.00 | 15.20 | 155 | 2930 |
| Example 42 | LMFP | 140 | 3570 | Poly crystalline | 213 | 12.5 | 30.5 | 0.32 | 0.98 | 0.01 | 0.01 | 99.00 | 79.20 | 155 | 2595 |
| Comparative Example C9 | LMFP | 140 | 3570 | Poly crystalline | 215 | 9.5 | 21.0 | 0.5 | 1 | 0 | 0 | \ | \ | 155 | 1845 |

EP 4 224 579 A1

21

As can be seen from the above Table 4, when a was 0.50-0.98 and b was 0.01-0.30 in the B material $LiNi_aCo_bMn_{1-a-b}O_2$, the positive electrode active material had both improved gram capacity and good cycle life. In particular, when a was 0.55-0.88 and b was 0.05-0.20, both the gram capacity and the cycle life of the positive electrode active material were significantly improved. In addition, $k=(a+b)/(1-a-b)$ was defined for the B material, and as can be seen from the above Table, when $1.50 \leq k \leq 99.00$, the positive electrode active material had both improved gram capacity and good cycle life.

Table 5 below shows the gram capacities and cycle lifes of the positive electrode active materials of the present application when the k*m values were different (25°C). Among them, the B material was a single crystal material.

Table 5

| | A material: LiMn$_{0.6}$Fe$_{0.4}$PO$_4$ | | | | B material: LiNi$_a$Co$_b$Mn$_{1-a-b}$O$_2$ | | | | | | | | | | | Positive electrode active material | |
|---|---|---|---|---|---|---|---|---|---|---|---|---|---|---|---|---|---|---|
| | Material | Mixing ratio m | Gram capacity mAh/g | 25°C cycle life @70 % SOH (cycles) | Material | Mixing ratio | Gram capacity mAh/g | Dv50 μm | Dv99 μm | BET m²/g | a | b | 1-a-b | k= (a+b)/(1-a-b) | k*m | Gram capacity mAh/g | 25°C cycle life @70 % SOH (cycles) |
| Example 43 | LMFP | 97% | 140 | 3570 | NCM | 3% | 170 | 4.2 | 10.5 | 0.55 | 0.55 | 0.12 | 0.33 | 2.03 | 1.97 | 141 | 3580 |
| Example 44 | LMFP | 90% | 140 | 3570 | NCM | 10% | 170 | 4.2 | 10.5 | 0.55 | 0.55 | 0.12 | 0.33 | 2.03 | 1.83 | 145 | 3850 |
| Example 45 | LMFP | 80% | 140 | 3570 | NCM | 20% | 170 | 4.2 | 10.5 | 0.55 | 0.55 | 0.12 | 0.33 | 2.03 | 1.62 | 146 | 3600 |
| Example 46 | LMFP | 70% | 140 | 3570 | NCM | 30% | 170 | 4.2 | 10.5 | 0.55 | 0.55 | 0.12 | 0.33 | 2.03 | 1.42 | 150 | 3280 |
| Example 47 | LMFP | 65% | 140 | 3570 | NCM | 35% | 170 | 4.2 | 10.5 | 0.55 | 0.55 | 0.12 | 0.33 | 2.03 | 1.32 | 151 | 3010 |
| Example 48 | LMFP | 50% | 140 | 3570 | NCM | 50% | 170 | 4.2 | 10.5 | 0.55 | 0.55 | 0.12 | 0.33 | 2.03 | 1.02 | 150 | 2600 |
| Comparative Example C10 | LMFP | 45% | 140 | 3570 | NCM | 55% | 170 | 4.2 | 10.5 | 0.55 | 0.55 | 0.12 | 0.33 | 2.03 | 0.91 | 154 | 1500 |
| Example 49 | LMFP | 97% | 140 | 3570 | NCM | 3% | 172 | 3.7 | 15 | 0.95 | 0.55 | 0.07 | 0.38 | 1.63 | 1.58 | 141 | 3400 |
| Example 50 | LMFP | 90% | 140 | 3570 | NCM | 10% | 172 | 3.7 | 15 | 0.95 | 0.55 | 0.07 | 0.38 | 1.63 | 1.47 | 145 | 3430 |
| Example 51 | LMFP | 80% | 140 | 3570 | NCM | 20% | 172 | 3.7 | 15 | 0.95 | 0.55 | 0.07 | 0.38 | 1.63 | 1.31 | 144 | 3550 |
| Example 52 | LMFP | 70% | 140 | 3570 | NCM | 30% | 172 | 3.7 | 15 | 0.95 | 0.55 | 0.07 | 0.38 | 1.63 | 1.14 | 145 | 3250 |

(continued)

| | A material: $LiMn_{0.6}Fe_{0.4}PO_4$ | | | | B material: $LiNi_aCo_bMn_{1-a-b}O_2$ | | | | | | | | | | | Positive electrode active material | |
|---|---|---|---|---|---|---|---|---|---|---|---|---|---|---|---|---|---|
| | Material | Mixing ratio m | Gram capacity mAh/g | 25°C cycle life @70 % SOH (cycles) | Material | Mixing ratio | Gram capacity mAh/g | Dv50 μm | Dv99 μm | BET m²/g | a | b | 1-a-b | k= (a+b )/ (1-a-b) | k*m | Gram capacity mAh/g | 25°C cycle life @70 % SOH (cycles) |
| Example 53 | LMFP | 65% | 140 | 3570 | NCM | 35% | 172 | 3.7 | 15 | 0.95 | 0.55 | 0.07 | 0.38 | 1.63 | 1.06 | 149 | 2980 |
| Example 54 | LMFP | 50% | 140 | 3570 | NCM | 50% | 172 | 3.7 | 15 | 0.95 | 0.55 | 0.07 | 0.38 | 1.63 | 0.82 | 150 | 2540 |
| Comparative Example C11 | LMFP | 45% | 140 | 3570 | NCM | 55% | 172 | 3.7 | 15 | 0.95 | 0.55 | 0.07 | 0.38 | 1.63 | 0.73 | 148 | 1800 |

As can be seen from Tables 4-5, when k*m≥1.00, optionally k*m≥1.10, and more optionally k*m≥1.14, the positive electrode active material had more excellent capacity and life advantages.

In particular, as can be seen from Tables 4-5, when $0.55 \leq a \leq 0.88$, $0.05 \leq b \leq 0.20$, $1.50 \leq k \leq 19.00$, and $1.6 \leq k*m \leq 10.64$, both the gram capacity and the cycle life of the positive electrode active material of the present application were significantly improved.

## Examples 55-69 and Comparative Examples C12-15

In each of the following Examples 55-69 and Comparative Examples C12-15, the A material was $LiMn_{0.6}Fe_{0.4}PO_4$ (a LMFP material), which was a single crystal material with a Dv50 of 1.1 μm, a Dv99 of 25 μm, a BET of 21 m²/g, a gram capacity of 140 mAh/g, and a cycle life of 3570 cycles; and the B material was a single crystal material or a polycrystalline material (i.e., secondary particles) with the chemical formula $LiNi_aCo_bMn_{1-a-b}O_2$ (a NMC material). The mixing ratio m of the A material was 80 wt%, and the mixing ratio of the B material was 20 wt%, based on the total weight of the positive electrode active material.

Table 6 below shows the gram capacities and cycle lifes of the positive electrode active materials obtained by mixing the A material with different B materials (25°C).

Table 6:

| | A material | | B material | | | | | | | Positive electrode active material | |
|---|---|---|---|---|---|---|---|---|---|---|---|
| | Gram capacity mAh/g | 25°C cycle life @70% SOH cycles | Material | | Gram capacity mAh/g | Dv50 μm | Dv99 μm | BET m²/g | Powder compacted density @4T g/cm³ | Gram capacity mAh/g | 25°C cycle life @70% SOH cycles |
| | | | a, b | Type | | | | | | | |
| Comparative Example C12 | 140 | 3570 | a=0.7, b=0.05 | Single crystal | 196 | 1.8 | 11 | 1.23 | 3.13 | 153 | 2150 |
| Example 55 | 140 | 3570 | a=0.7, b=0.05 | Single crystal | 194 | 2.1 | 12 | 1.19 | 3.18 | 152 | 3050 |
| Example 56 | 140 | 3570 | a=0.55, b=0.05 | Single crystal | 175 | 3.4 | 12 | 1.05 | 3.21 | 145 | 3250 |
| Example 57 | 140 | 3570 | a=0.7, b=0.05 | Single crystal | 190 | 3.5 | 14 | 0.89 | 3.22 | 150 | 3720 |
| Example 58 | 140 | 3570 | a=0.55, b=0.05 | Single crystal | 172 | 3.7 | 15 | 0.95 | 3.23 | 144 | 3550 |
| Example 59 | 140 | 3570 | a=0.7, b=0.05 | Single crystal | 188 | 3.8 | 16 | 0.81 | 3.24 | 149 | 3680 |
| Example 60 | 140 | 3570 | a=0.55, b=0.12 | Single crystal | 170 | 4.2 | 10.5 | 0.55 | 3.35 | 146 | 3600 |
| Example 61 | 140 | 3570 | a=0.83, b=0.12 | Single crystal | 201 | 4.4 | 15 | 0.61 | 3.3 | 149 | 3760 |
| Example 62 | 140 | 3570 | a=0.7, b=0.05 | Single crystal | 183 | 4.5 | 21 | 0.41 | 3.3 | 144 | 2970 |
| Comparative Example C13 | 140 | 3570 | a=0.55, b=0.05 | Single crystal | 170 | 4.6 | 18 | 0.54 | 3.25 | 138 | 2580 |
| Comparative Example C14 | 140 | 3570 | a=0.83, b=0.12 | Secondary particle | 210 | 3.2 | 12 | 1.85 | 3.00 | 149 | 2530 |
| Example 63 | 140 | 3570 | a=0.55, b=0.12 | Hollow secondary particle | 175 | 3.5 | 10 | 1.51 | 3.01 | 148 | 3720 |

EP 4 224 579 A1

26

(continued)

| | A material | | B material | | | | | | | Positive electrode active material | |
|---|---|---|---|---|---|---|---|---|---|---|---|
| | Gram capacit y mAh/g | 25°C cycle life @70% SOH cycles | Material | | Gram capacit y mAh/g | Dv50 μm | Dv99 μm | BET m²/g | Powder compacted density @4T g/cm³ | Gram capacit y mAh/g | 25°C cycle life @70% SOH cycles |
| | | | a, b | Type | | | | | | | |
| Example 64 | 140 | 3570 | a=0.83, b=0.12 | Secondary particle | 208 | 5 | 15 | 1.5 | 3.15 | 156 | 3500 |
| Example 65 | 140 | 3570 | a=0.55, b=0.12 | Secondary particle | 173 | 5.1 | 18 | 1.35 | 3.4 | 145 | 3640 |
| Example 66 | 140 | 3570 | a=0.83, b=0.12 | Secondary particle | 208 | 8.6 | 17 | 0.7 | 3.23 | 155 | 3510 |
| Example 67 | 140 | 3570 | a=0.83, b=0.12 | Secondary particle | 205 | 9.2 | 20 | 0.54 | 3.5 | 154 | 4250 |
| Example 68 | 140 | 3570 | a=0.83, b=0.12 | Secondary particle | 203 | 12 | 22 | 0.55 | 3.5 | 151 | 4040 |
| Example 69 | 140 | 3570 | a=0.83, b=0.12 | Secondary particle | 200 | 13 | 25 | 0.31 | 3.52 | 149 | 3250 |
| Comparative Example C15 | 140 | 3570 | a=0.83, b=0.12 | Secondary particle | 196 | 14 | 31.5 | 0.28 | 3.55 | 142 | 2480 |

As can be seen from the above Table 6, when the B material was a single crystal material, and its crystal particles had a Dv50 of 2-4.5 $\mu$m, optionally 2.1-4.5 $\mu$m, and/or a Dv99 of 10.5-21 $\mu$m, and/or a BET of 0.40-1.20 m$^2$/g, optionally 0.41-1.19 m$^2$/g, compared with the use of the A material alone, the positive electrode active material of the present application had improved gram capacity and good cycle life (that is, without significantly losing the cycle life advantage of the A material). Optionally, when the Dv50 was 2.1-4.4 $\mu$m and/or the BET was 0.55-0.95 m$^2$/g, compared with the use of the A material alone, the positive electrode active material of the present application had improved gram capacity and longer cycle life. More optionally, when the Dv50 was 3.5-4.4 $\mu$m and/or the BET was 0.55-0.89 m$^2$/g, compared with the use of the A material alone, the positive electrode active material of the present application had both improved gram capacity and cycle life.

When the B material was a polycrystalline material (that is, secondary particles, the average particle diameter of primary particles constituting the secondary particles was in the range of 50-800 nm as determined by scanning electron microscopy), and the Dv50 was 3.5-13 $\mu$m, and/or the Dv99 was 10-25 $\mu$m, and/or the BET was 0.31-1.51 m$^2$/g, compared with the use of the A material alone, the positive electrode active material of the present application had improved gram capacity and longer cycle life. Optionally, when the Dv50 was 3.5-12 $\mu$m and/or the BET was 0.54-1.51 m$^2$/g, compared with the use of the A material alone, the positive electrode active material of the present application had increased gram capacity and cycle life.

It should be noted that the present application is not limited to the above embodiments. The above embodiments are merely exemplary, and embodiments having substantially the same technical idea and the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

1. A positive electrode active material comprising an A material as described below and a B material as described below, wherein
   the A material is at least one selected from the following materials:

   $$Li_xM_y(PO_4)_z$$

   wherein M is selected from one or more of Ni, Co, Mn, Fe, Mg, Al, V, Zn, Zr and F, $1{\le}x{\le}3$, $1{\le}z{\le}3$, v is the valence of M, and x+vy-3z=0;
   the A material is a single crystal material or a single crystal-like material;
   the A material has a Dv50 of 0.8 $\mu$m to 4.2 $\mu$m, optionally 0.8 $\mu$m to 3.2 $\mu$m, more optionally 0.9 $\mu$m to 2.3 $\mu$m, and still more optionally 1 $\mu$m to 1.5 $\mu$m;
   the B material is selected from at least one of the following materials:

   (i) $LiAO_2$, wherein A is Ni, Co or Mn; and
   (ii) $LiNi_aCo_bE_{1-a-b}O_2$, wherein E is selected from at least one of Mn and Al, $0.50{\le}a{\le}0.98$, and $0.001{\le}b{\le}0.3$;

   the A material is present in a mixing ratio m of 50 wt% to 97 wt%, optionally 65 wt% to 97 wt%, more optionally 70 wt% to 95 wt%, and still more optionally 80 wt% to 95 wt%, based on the total weight of the positive electrode active material.

2. The positive electrode active material according to claim 1, wherein the B material is present in a mixing ratio of 3 wt% to 50 wt%, and optionally 5 wt% to 30 wt%, based on the total weight of the positive electrode active material.

3. The positive electrode active material according to claim 1 or 2, wherein the A material is selected from at least one of:

   lithium manganese iron phosphate or lithium iron phosphate of chemical formula $LiMn_dFe_{1-d}PO_4$, wherein $0{\le}d{\le}0.9$, optionally $0.1{\le}d{\le}0.9$, and more optionally $0.1{\le}d{\le}0.8$; and
   lithium vanadium phosphate of chemical formula $Li_3V_2(PO_4)_3$.

4. The positive electrode active material according to any one of claims 1 to 3, wherein the A material has a specific surface area of 8 m$^2$/g to 26 m$^2$/g, optionally 10 m$^2$/g to 24 m$^2$/g, and more optionally 10 m$^2$/g to 23 m$^2$/g.

5. The positive electrode active material according to any one of claims 1 to 4, wherein in (ii) $LiNi_aCo_bE_{1-a-b}O_2$ of the B material, $0.5 \leq a \leq 0.98$, optionally $0.50 \leq a \leq 0.90$, more optionally $0.50 \leq a \leq 0.88$, and still more optionally $0.55 \leq a \leq 0.88$; and/or $0.005 \leq b \leq 0.30$, optionally $0.05 \leq b \leq 0.30$, and more optionally $0.05 \leq b \leq 0.20$.

6. The positive electrode active material according to any one of claims 1 to 5, wherein in (ii) $LiNi_aCo_bE_{1-a-b}O_2$ of the B material, the relationship of a and b is as follows:
$k = (a+b)/(1-a-b)$, and $1.5 \leq k \leq 99$, and optionally $1.5 \leq k \leq 19$.

7. The positive electrode active material according to claim 6, wherein the relationship between the k and m is as follows: $k*m \geq 1$, optionally $k*m \geq 1.1$, and more optionally $k*m \geq 1.6$.

8. The positive electrode active material according to any one of claims 1 to 7, wherein (ii) $LiNi_aCo_bE_{1-a-b}O_2$ of the B material is $LiNi_aCo_bMn_{1-a-b}O_2$, $LiNi_aCo_bAl_{1-a-b}O_2$, $LiNi_aCo_bMn_cAl_{1-a-b-c}O_2$ or a combination thereof, wherein a and b are as defined in claim 1, and $0.01 \leq c \leq 0.34$.

9. The positive electrode active material according to any one of claims 1 to 8, wherein the B material is a single crystal or a single crystal-like material, the particle thereof has a Dv50 of 2 $\mu$m to 4.5 $\mu$m, optionally 2.1 $\mu$m to 4.4 $\mu$m, and more optionally 3.5 $\mu$m to 4.4 $\mu$m; and/or a specific surface area of 0.40 $m^2$/g to 1.20 $m^2$/g, optionally 0.55 $m^2$/g to 0.95 $m^2$/g, and more optionally 0.55 $m^2$/g to 0.89 $m^2$/g.

10. The positive electrode active material according to any one of claims 1 to 8, wherein the B material is a secondary particle having a Dv50 of 3.5 $\mu$m to 13 $\mu$m, and optionally 3.5 $\mu$m to 12 $\mu$m; and/or a specific surface area of 0.31 $m^2$/g to 1.51 $m^2$/g, and optionally 0.54 $m^2$/g to 1.51 $m2$/g.

11. A positive electrode sheet, comprising a current collector and an electrode sheet material layer provided on at least one surface of the current collector, wherein the electrode sheet material layer comprises the positive electrode active material of any one of claims 1 to 10.

12. A secondary battery, comprising the positive electrode active material of any one of claims 1 to 10 or the positive electrode sheet of claim 11.

13. A battery module, comprising the secondary battery of claim 12.

14. A battery pack, comprising the battery module of claim 13.

15. An electrical apparatus, comprising at least one selected from the secondary battery of claim 12, the battery module of claim 13, or the battery pack of claim 14.

5

# FIG. 1

5

# FIG. 2

FIG. 3

1

FIG. 4

1

2

4 4 4

4
4
4

3

FIG. 5

FIG. 6

**INTERNATIONAL SEARCH REPORT**

| International application No. |
|---|
| **PCT/CN2021/137492** |

**A. CLASSIFICATION OF SUBJECT MATTER**

H01M 4/58(2010.01)i; H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 磷酸铁锂, 磷酸锰铁锂, 镍, 钴, 锰, 铝, 单晶, 体积, 粒径, 比表面积, lithium iron phosphate, lithium iron manganese phosphate, nickel, cobalt, manganese, aluminum, single crystal, volume, particle size, specific surface area

**C. DOCUMENTS CONSIDERED TO BE RELEVANT**

| Category* | Citation of document, with indication, where appropriate, of the relevant passages | Relevant to claim No. |
|---|---|---|
| X | CN 108777298 A (NINGBO INSTITUTE OF MATERIAL TECHNOLOGY AND ENGINEERING, CHINESE ACADEMY OF SCIENCES) 09 November 2018 (2018-11-09) description, paragraphs 2-103 | 1-15 |
| X | CN 105556712 A (BASF SE) 04 May 2016 (2016-05-04) description, paragraphs 25-74, 86-93, and 114-183 | 1-15 |
| X | CN 102210047 A (GS YUASA INTERNATIONAL LTD.) 05 October 2011 (2011-10-05) description, paragraphs 2-3, 19-86, and 94-205 | 1-15 |
| X | JP 2007317534 A (SONY CORP.) 06 December 2007 (2007-12-06) description, paragraphs 2-78 | 1-15 |
| X | CN 102683696 A (SAMSUNG SDI CO., LTD.) 19 September 2012 (2012-09-19) description, paragraphs 3-55 and 62-128 | 1-15 |
| X | CN 111446488 A (NINGDE CONTEMPORARY AMPEREX TECHNOLOGY CO., LTD.) 24 July 2020 (2020-07-24) description, paragraphs 2, 28-87, 101-102, and 111-122 | 1-15 |
| X | KR 20180013512 A (LG CHEMICAL LTD.) 07 February 2018 (2018-02-07) description, paragraphs 10-100 and 121-181 | 1-15 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 August 2022** | **29 August 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/137492**

| C. | DOCUMENTS CONSIDERED TO BE RELEVANT | |
|---|---|---|
| Category* | Citation of document, with indication, where appropriate, of the relevant passages | Relevant to claim No. |
| A | CN 109962221 A (JIANGXI XINGYING TECHNOLOGY CO., LTD.) 02 July 2019 (2019-07-02) <br> entire document | 1-15 |

Form PCT/ISA/210 (second sheet) (January 2015)

**INTERNATIONAL SEARCH REPORT**
Information on patent family members

International application No.

**PCT/CN2021/137492**

| Patent document cited in search report | | | Publication date (day/month/year) | Patent family member(s) | | | Publication date (day/month/year) |
|---|---|---|---|---|---|---|---|
| CN | 108777298 | A | 09 November 2018 | None | | | |
| CN | 105556712 | A | 04 May 2016 | JP | 2016531412 | A | 06 October 2016 |
| | | | | US | 2016233488 | A1 | 11 August 2016 |
| | | | | EP | 3047531 | A1 | 27 July 2016 |
| | | | | KR | 20160058166 | A | 24 May 2016 |
| | | | | PL | 3047531 | T3 | 30 April 2018 |
| | | | | WO | 2015040005 | A1 | 26 March 2015 |
| | | | | EP | 3047531 | B1 | 15 November 2017 |
| | | | | JP | 6469707 | B2 | 13 February 2019 |
| | | | | US | 10446833 | B2 | 15 October 2019 |
| | | | | KR | 102300706 | B1 | 09 September 2021 |
| CN | 102210047 | A | 05 October 2011 | KR | 20110083680 | A | 20 July 2011 |
| | | | | US | 2011223482 | A1 | 15 September 2011 |
| | | | | JP | WO2010053174 | A1 | 05 April 2012 |
| | | | | EP | 2357693 | A1 | 17 August 2011 |
| | | | | JP | 2011159388 | A | 18 August 2011 |
| | | | | WO | 2010053174 | A1 | 14 May 2010 |
| | | | | JP | 5381024 | B2 | 08 January 2014 |
| | | | | CN | 102210047 | B | 25 June 2014 |
| | | | | JP | 5574239 | B2 | 20 August 2014 |
| | | | | EP | 2357693 | B1 | 11 July 2018 |
| JP | 2007317534 | A | 06 December 2007 | None | | | |
| CN | 102683696 | A | 19 September 2012 | CN | 106816577 | A | 09 June 2017 |
| | | | | EP | 2498323 | A2 | 12 September 2012 |
| | | | | KR | 20120104484 | A | 21 September 2012 |
| | | | | US | 2012231341 | A1 | 13 September 2012 |
| | | | | JP | 2012190786 | A | 04 October 2012 |
| | | | | EP | 2498323 | B1 | 07 October 2015 |
| | | | | KR | 101718054 | B1 | 21 March 2017 |
| | | | | JP | 6236197 | B2 | 22 November 2017 |
| CN | 111446488 | A | 24 July 2020 | None | | | |
| KR | 20180013512 | A | 07 February 2018 | KR | 102227302 | B1 | 15 March 2021 |
| CN | 109962221 | A | 02 July 2019 | CN | 109962221 | B | 17 March 2020 |

Form PCT/ISA/210 (patent family annex) (January 2015)